# EUROPEAN PATENT SPECIFICATION

(11) **EP 0 421 607 B1**
(45) Date of publication and mention of the grant of the patent: **09.11.1994**
(21) Application number: 90309618.8
(22) Date of filing: 03.09.1990
(51) Int. Cl.: F16L 58/16, F16L 58/10, B29C 63/00, B32B 15/08

(54) **Tape coating**
Bandumhüllung
Bande d'enveloppe

(30) Priority: 06.09.1989 US 403416
(43) Date of publication of application: 10.04.1991
(73) Proprietor: THE KENDALL COMPANY, Mansfield, Massachusetts 02048 (US)
(72) Inventor: Dempster III, William A., Nashua, New Hampshire 03060 (US); Serra, Jerry M., Chelmsford, Massachussetts 01824 (US); Decoste, Leonard D., Jr., Stoneham, Massachusetts 02180 (US); Kellner, Jordan D., Wayland, Massachusetts 01778 (US)
(74) Representative: Kearney, Kevin David Nicholas

(56) References cited:
- AT-B- 364 972
- DE-A- 2 255 863
- DE-A- 2 324 898

## Description

The present invention relates in general to protective coatings of tubular objects and specifically to protective coatings of pipes, and even more particularly to inground pipes.

The art is replete with protective pipeline coatings which provide varying degrees of resistance to impact, mechanical penetration, storage, indentation, abrasion, soil stresses and cathodic disbondment. Four major categories of protective pipeline coating are presently employed by the pipeline industry. They are:
(1) Hot Applied coal-tar enamel and asphalt mastics in relatively thick layers (100 mils (2.5 mms)) and commonly reinforced on the outside with glass or asbestos sheets. While such coatings are reported to represent over half of the plant-applied coatings in the United States, the hazards presented by their use foretell a decreasing popularity of this category. Further, the products show poor impact resistance, poor resistance to mechanical penetration, poor abrasion resistance, poor stability to soil stress conditions, and are only deemed fair in regard to indentation resistance, pipe bending, cathodic disbonding and resistance to hydrocarbon solvents.
(2) Extrusion coatings of a thermoplastic resin: (typically 40 mils (1.0 mms)). In practice, polyethylene has virtually a monopoly in this area. The technique may involve a seamless tubular extrusion over the pipe or a flat die sheet extrusion wrapped over the pipe. In most cases, the polymer is applied to a first-applied mastic layer (e.g. bituminous). These coatings show improved properties in regard to those mentioned above for the Hot-Applied enamel and coal tar coatings except insofar as resistance to hydrocarbon solvents.
(3) Fusion-bonded coatings - A thermoplastic powder is electrostatically applied to hot pipe where it "melts", adheres to the metal and fuses to itself. Only three basic materials have been widely used --polyethylene, vinyl and epoxy powders with only the latter enjoying commercial success in the United Sttes. Chemically, these are, generally, bis-phenol A polymers with epoxy end groups.
   The epoxies require a thermal curing to the thermoset form and usually a catalyst is used in the system (e.g. amines, acids, boron halides, etc.). Frequently a liquid epoxy primer is used prior to the powder coating. Typically epoxy coatings have been 12-14 mils (0.3-0.35 mm) in thickness to provide at least acceptable resistance to cathodic disbonding, although in M.D. Simpson's paper "External Protection of Steel Pipes Using Epoxy Powder Coatings" (contribution SI) presented at the Second International Conference on the Internal and External Protection of Pipes (in England Sept. 1977) he states (page X2)
   "Bitumen coal tar and polyethylene are requird to be applied relatively thick, but epoxy powder coatings give excellent protection with only 3 mm of coatings.".
   Apparently and obviously "3 mm" should be -0.3 MM-(12 mils) nevertheless, this value (i.e. 0.3 MM) still represents a relatively thick coating and its attendant disadvantages, e.g. brittleness and lack of flexibility and stresses at the pipe-epoxy interface.
   In order to effect a satisfactory epoxy coating which would have satisfactory resistance to impact, mechanical penetration, indentation, abrasion, soil stresses, and cathodic disbondment it has been accepted that about a 12-14 mil (0.3-0.35 mm) thickness coating is required, which is very costly to produce.
(4) Tape Coating Systems (typically 20-80 mils (0.5-2.0 mms) thick). This method entails spirally wrapping a corrosion protective tape around a rubber based primer coating, referred to in the art as the innerwrap, followed by applying a second plastic outerwrap tape in a similar fashion to the innerwrap.
   Many improvements on this tape coating system involving an inner and an outerwrap, have been advanced all of which have at their essence the primary task of promoting a tight bond thereby creating a coating which insulates the pipe from degradative external forces.
   Accordingly, some tapes comprise polyethylene backings with a pressure-sensitive adhesive, or primer-activated adhesive coating thereon. The properties exhibited by these pipe coatings are similar to those of extrusion coated pipe coatings.
   U.S. Patent No. 4,213,486 issued to Samour et al. and assigned to the present assignee, discloses a polyethylene outerwrap carrying a means for effecting bonding to the innerwrap epoxy layer wherein the means may be a hot melt adhesive or a pressure-sensiive adhesive.
   U.S. Patent No. 3,874,418 issued to Hielema and assigned to the present assignee discloses:
   "A method of coating a pipe and a pipe coated thereby, said method comprising the steps of progressively spirally winding a corrosion protective adhesive coated plastic tape onto the outer surface of the pipe with a spiral overlap, covering the coated pipe by progressively winding a film thereon with a predetermined overlap, and, as the film is wound onto the coated pipe, introducing and distributing under pressure a hot melted adhesive into intimate contact with the surface of the marginal portion of the trailing edge of the film and the surfaces of the overlapped portion along the leading edge thereof and of the portion of the tape immediately adjacent the leading edge of the film.".

Still a further advancement in the art of tape coat systems is disclosed in U.S. Patent No. 4,806,400 issued to Sancaktar and assigned to the present assignee, wherein the improvement consists of tapering the opposed edges of the tape to enhance a tighter closure by being less subject to soil stress.

DE-A-2255863 discloses a tape wrap system adapted for protecting tubular articles comprising an inner wrap adapted to cover the surface of the article to be protected and an outerwrap adapted to be placed over the said innerwrap, the innerwrap comprising an impact-resistance layer carrying an adhesive layer on its inner surface and a layer on its outer surface, the outerwrap comprising a carrier layer having a layer on at least one surface thereof.

While all the aforementioned tape coat systems provide for successful protective coatings, they still comprise separate layers. Accordingly, the task of the present invention can be described as being directed to improving the present tape pipewrap systems against degradative external forces by providing for a continuous and seamless protective tape coating system.

The present invention solves the aforementioned task in a simple and elegant manner by heat fusing a polymeric outerwrap to a polymeric innerwrap tape coating, by incorporating a heat fusable material into said inner and outer wrap, which when heated and cooled forms a completed closed protective tape coating.

Thus according to the present invention a tape wrap system adapted for protecting tubular articles comprises an innerwrap covering the surface of the article to be protected and an outerwrap placed over the said innerwrap, the said innerwrap comprising an impact-resistance layer carrying an adhesive layer on its inner surface and a layer on its outer surface, the said outerwrap comprising a carrier layer having a layer on at least one surface thereof, characterised in that the innerwrap and the outerwrap incorporate heat fusable material and in that the said tape wrap system is applied to the tubular article so that on heating and cooling the outer wrap is heat fused to the inner wrap thereby forming a completely closed protective coating.

In a preferred embodiment the system comprises an innerwrap covering the surface of the article to be protected and an outerwrap placed over the said innerwrap, the said innerwrap comprising an impact-resistance layer carrying an adhesive layer on its inner surface and a layer on its outer surface, the said outerwrap comprising a carrier layer having a layer on at least one surface thereof, characterised in that the layer on the outer surface of the innerwrap is heat fusable and in that the layer on the at least one surface of the outerwrap is heat fusable and in that the said tape wrap system is applied to the tubular article with the heat fusable layer of the innerwrap disposed outwardly and the at least one heat fusable layer of the outerwrap being juxtaposed to the heat fusable layer of the innerwrap whereby on heating the juxtaposed heat fusable layers are fused together.

As mentioned previously, the present invention relates in general to protective coatings of tubular objects and specifically to protective tape coatings for inground pipes.

The novel coating systems of this invention comprises a polymeric innerwrap and a polymeric outerwrap. The polymeric innerwrap comprises an A/B/C layered construction; wherein the A layer consists essentially of a heat fusable material preferably from about 0.5 to about 10.0 mils (0.013-0.25 mms) thick; preferred heat fusable materials are ethyl vinyl acetate, ethyl methyl acrylate, and low density polyethylene, ethyl vinyl acetate being particularly preferred; the B layer consists essentially of an impact resistant polyolefin material (preferably polyethylene, and most preferably a mixture of low and high density polyethylene), preferably from about 5.0 to about 30.0 mils (0.13-0.75 mms) thick; and the C layer consists essentially of an adhesive (preferably a thermosetting adhesive) preferably from about 2.0 to about 20.0 mils (0.051-0.51 mms) thick. Exemplary thermosetting adhesives are thermosetting rubber-based adhesives such as butyl rubber, natural rubber and styrene butadiene, butyl rubber and styrene butadiene, as well as those sold under the trade mark Kraton.

The adhesive layer C, in use, contacts the surface of the pipe.

The novel outerwrap comprises an A/B/A layer construction corresponding to the aforementioned description wherein the heat fusable A layer is preferably from about 0.5 to about 10.0 mils (0.013-0.25 mms) thick, the carrier or preferably impact resistance B layer is preferably from about 5.0 to about 30.0 mils (0.13-0.75 mms) thick, and the heat fusable A layer is preferably from about 0.5 to about 10.0 mils (0.013-0.25 mms) thick. The manufacture of such coatings is well known in the art comprising such well known processes as calendering, extrusion and coextrusion, and as such comprises no part of the present invention. The different A layers as well as the different B layers in the inner and outer wrap can be the same or different materials and may be in the same or different concentrations, while remaining within the general aforementioned categories.

The outer heat fusable layer A of the inner pipe wrap in use is juxtaposed to the inner heat fusable layer A of the outer pipe wrap and the two fusable layers can thus be fused together.

The general process of producing a tape coating system comprising the novel invention includes well known plant tape coating methods. The pipe may be first preheated to approximately 200°F (93°C) and then prepared by any of the conventional ways known in the art such as by shot or grit blasting. Primer is then applied to the pipe by way of well known processes such as spraying or brushing. Next, the pipe is coated with the A/B/C innerwrap by progressively spirally winding said tape onto the outer surface of the pipe thereby maintaining a marginal overlap. Notably, the innerwrap is applied in such a way that layer C is placed on the pipe while layer A is on the outer surface. Outerwrap A/B/A is then applied to cover the coated pipe by progressively winding said A/B/A tape onto the innerwrap coated pipe with a predetermined overlap. Lastly, flame or oven heat is applied to the coated pipe to attain a tape temperature to fuse the juxtaposed heat fusable layers e.g. ranging from about 225°F to about 325°F (107 to 163°C). Thereafter the pipe is cooled by any of the known methods, exemplary of which is water cooling.

In accordance with this novel process, the outerwrap is completely heat fused to the innerwrap thereby forming a uniform, continuous, and completely closed protective coating which fully protects against external degradative forces. More specifically, the preferred ethylene vinyl acetate layers namely layers A are heat fused thereby creating a tight bond between the inner and outerwrap so as to achieve essentially a one layer seamless coating. Said seamless coating is highly advantageous in that no openings are present which when subjected to external forces create potential portals of entry for pipe corrosion factors. In sum, the present invention provides for a completely closed internal pipewrap environment which advangageously maintains pipe integrity.

The following examples show by way of illustration and not limitation the novel characteristics of the present invention.

| Example I (Innerwrap) | | | |
|---|---|---|---|
| Layer | Ingredient(s) | Thickness | |
| | | (mils) | (mms) |
| A | Ethylene Vinyl Acetate | 4 | 0.10 |
| B | 64% Low Density Polyethylene | 11 | 0.275 |
| | 32% High Density Polyethylene | | |
| | 2.5% Black Concentrate | | |
| | 1.0% Antioxidant/Low Density Polyethylene (5:95 Ratio) | | |
| C | High Shear Adhesive | 25 | 0.625 |

| Example II (Outerwrap) | | | |
|---|---|---|---|
| Layer | Ingredient(s) | Thickness | |
| | | (mils) | (mms) |
| A′ | 96% Ethylene Vinyl Acetate | 3 | 0.075 |
| | 4% White Concentrate | | |
| B | 66-96% High Density Polyethylene | 19 | 0.475 |
| | 0-30% Low Density Polyethylene | | |
| | 4% White Concentrate | | |
| A˝ | 96% Ethylene Vinyl Acetate | 2.5 | 0.064 |
| | 4% White Concentrate | | |

Coatings prepared by the previously mentioned process and in accordance with Example I and II were subjected to Cathodic Disbondment, Impact, and Soil Stress Testing. Prior art tapes comprising an outerwrap with a polyethylene backing and a pressure-sensitive adhesive coated thereon and an innerwrap consisting of polyethylene, prepared in the aforementioned process but omitting both the heating and cooling steps, were used as controls.

The following data illustrates the advantageous characteristics of the coating of the present invention and consequently the longevity and integrity of a pipe coated in accordance with the present invention.

**TABLE I**

| Cathodic Disbondment (measured after 30 days) | | | | |
|---|---|---|---|---|
| System | Temperature | | Cathodic Disbondment | |
| | (°F) | (°C) | (inches²) | (cms²) |
| Test Sample | 140 | 60 | 2.44 | 15.7 |
| Control | 140 | 60 | 6.00 | 38.7 |
| Test | 70 | 21 | 0.75 | 4.8 |
| Control | 70 | 21 | 0.6-0.75 | 3.9-4.8 |

**TABLE II**

| Impact (administered and measured in accordance with ASTM G-14 guidelines) | | |
|---|---|---|
| | in/lb | cm/Kg |
| Test Sample | 60 | 69 |
| Control | 45 | 52 |

**TABLE III**

| Soil Stress at 90°F (32°C) (By the method disclosed in U.S. Patent No. 4,483,197 issued to Jordan Kellner and assigned to the present assignee herein, incorported by reference) | |
|---|---|
| Test Sample | No peel back of outerwrap |
| Control | Outerwrap peeled back. |

These test results demonstrate the advantageous characteristics of resistance to external degradative forces. Specifically, cathodic disbondment is more than 50% decreased at 140°F (60°C), which is particularly advantageous given the implantation of pipes in hot temperature regions. The results of impact testing show an advantage over the control yet the most important soil stress testing shows a highly significant improvement, no peeling of the outerwrap at 90°F (32°C). Resistance to soil stress is highly significant since pipeline tape deterioration, and thus corrosion, is mostly caused by soil stress imparted on the inground pipe.

By way of recapitulation, heat fusing polymeric outerwrap tape to a polymeric innerwrap tape by incorporating an heat fusable moiety in both layers, advantageously prolongs the integrity and hence longevity of inground pipes.

## Claims

1. A tape wrap system for protecting tubular articles comprising an innerwrap covering the surface of the article to be protected and an outerwrap placed over the said innerwrap, the said innerwrap comprising an impact-resistance layer carrying an adhesive layer on its inner surface and a layer on its outer surface, the said outerwrap comprising a carrier layer having a layer on at least one surface thereof, characterised in that the innerwrap and the outerwrap incorporate heat fusable material and in that the said tape wrap system is applied to the tubular article so that on heating and cooling the outer wrap is heat fused to the inner wrap thereby forming a completely closed protective coating.

2. A tape wrap system for protecting tubular articles comprising an innerwrap covering the surface of the article to be protected and an outerwrap placed over the said innerwrap, the said innerwrap comprising an impact-resistance layer carrying an adhesive layer on its inner surface and a layer on its outer surface, the said outerwrap comprising a carrier layer having a layer on at least one surface thereof, characterised in that the layer on the outer surface of the innerwrap is heat fusable and in that the layer on the at least one surface of the outerwrap is heat fusable and in that the said tape wrap system is applied to the tubular article with the heat fusable layer of the innerwrap disposed outwardly and the at least one heat fusable layer of the outerwrap being juxtaposed to the heat fusable layer of the innerwrap whereby on heating the juxtaposed heat fusable layers are fused together.

3. A tape wrap system as claimed in Claim 2 in which both surfaces of the carrier layer of the outerwrap carry heat fusable layers which may be the same or different.

4. A tape wrap system as claimed in Claim 2 or Claim 3 characterised in that the carrier layer in the outerwrap is an impact-resistance layer.

5. A tape wrap system as claimed in Claim 4 characterised in that the inner wrap comprises a layer of polyethylene.

6. A tape wrap system as claimed in Claim 4 characterised in that the outer wrap comprises a layer of polyethylene.

7. A tape wrap system as claimed in Claim 4, 5 or 6 characterised in that the impact-resistance layers in the inner and outer wraps are of polyolefin which may be the same or different in each layer.

8. A tape wrap system as claimed in any one of Claims 1 to 7 characterised in that the heat fusible material comprises ethyl vinyl acetate, ethyl methyl acrylate or low density polyethylene.

9. A tape wrap system as claimed in any one of Claims 1 to 8 characterised in that the inner wrap has a heat fusable layer 0.01 to 0.25 mms thick, an impact-resistance layer 0.1 to 0.75 mms thick and an adhesive layer 0.05 to 0.5 mms thick.

10. A tape wrap system as claimed in any one of Claims 1 to 9 characterised in that the outer wrap has an inner heat fusable layer 0.01 to 0.25 mms thick, an impart-resistance layer 0.1 to 0.75 mms thick, and an outer heat fusable layer 0.01 to 0.25 mms thick.

11. A method of coating a tubular article with a tape wrap system as claimed in any one of Claims 1 to 10 which comprises wrapping around a prepared surface of the article, the innerwrap of the tape wrap system with its adhesive layer contacting the surface of the article, wrapping the outerwrap of the tape wrap system with a heat fusable surface juxtaposed to the heat fusable outer surface of the innerwrap and heating the assembly so as to fuse together the two juxtaposed heat fusable layers.

12. A pipeline whenever coated by a method as claimed in Claim 11.

## Patentansprüche

1. Bandumwicklungssystem zum Schutz von rohrförmigen Gegenständen, das eine Innenumwicklung, die die Oberfläche des zu schützenden Gegenstands bedeckt, und eine über der Innenumwicklung angeordnete Außenumwicklung umfaßt, wobei die Innenumwicklung eine stoßfeste Schicht mit einer Klebeschicht auf ihrer inneren Oberfläche und einer Schicht auf ihrer äußeren Oberfläche umfaßt, die Außenumwicklung eine Trägerschicht mit einer Schicht auf mindestens einer ihrer Oberflächen umfaßt, dadurch gekennzeichnet, daß die Innenumwicklung und die Außenumwicklung warm verschmelzbares Material einschließen und daß das Bandumwicklungssystem auf den rohrförmigen Gegenstand so aufgebracht wird, daß bei Erwärmen und Abkühlen die Außenumwicklung mit der Innenumwicklung warm verschmolzen wird, wodurch eine vollständig geschlossene schützende Beschichtung gebildet wird.

2. Bandumwicklungssystem zum Schutz von rohrförmigen Gegenständen, das eine Innenumwicklung, die die Oberfläche des zu schützenden Gegenstands bedeckt, und eine über der Innenumwicklung angeordnete Außenumwicklung umfaßt, wobei die Innenumwicklung eine stoßfeste Schicht mit einer Klebeschicht auf ihrer inneren Oberfläche und einer Schicht auf ihrer äußeren Oberfläche umfaßt, die Außenumwicklung eine Trägerschicht mit einer Schicht auf mindestens einer ihrer Oberflächen umfaßt, dadurch gekennzeichnet, daß die Schicht auf der äußeren Oberfläche der Innenumwicklung warm verschmelzbar ist, und daß die Schicht auf mindestens einer Oberfläche der Außenumwicklung warm verschmelzbar ist, und daß das Bandumwicklungssystem auf den rohrförmigen Gegenstand mit der warm verschmelzbaren Schicht auf der Innenumwicklung nach außen angeordnet aufgebracht wird und die mindestens eine warm verschmelzbare Schicht der Außenumwicklung sich direkt neben der warm verschmelzbaren Schicht der Innenumwicklung befindet, wodurch bei Erhitzen die nebeneinander liegenden warm verschmelzbaren Schichten zusammengeschmolzen werden.

3. Bandumwicklungssystem nach Anspruch 2, bei dem beide Oberflächen der Trägerschicht der Außenumwicklung warm verschmelzbare Schichten tragen, die gleich oder unterschiedlich sein können.

4. Bandumwicklungssystem nach Anspruch 2 oder Anspruch 3, dadurch gekennzeichnet, daß die Trägerschicht in der Außenumwicklung eine stoßfeste Schicht ist.

5. Bandumwicklungssystem nach Anspruch 4, dadurch gekennzeichnet, daß die Innenumwicklung eine Schicht aus Polyethylen umfaßt.

6. Bandumwicklungssystem nach Anspruch 4, dadurch gekennzeichnet, daß die Außenumwicklung eine Schicht aus Polyethylen umfaßt.

7. Bandumwicklungssystem nach Anspruch 4, 5 oder 6, dadurch gekennzeichnet, daß die stoßfesten Schichten in der Innen- und Außenumwicklung aus Polyolefin sind, das in jeder Schicht gleich oder unterschiedlich sein kann.

8. Bandumwicklungssystem nach einem der Ansprüche 1 bis 7, dadurch gekennzeichnet, daß das warm verschmelzbare Material Ethylvinylacetat, Ethylmethylacrylat oder Polyethylen mit niedriger Dichte umfaßt.

9. Bandumwicklungssystem nach einem der Ansprüche 1 bis 8, dadurch gekennzeichnet, daß die Innenumwicklung eine warm verschmelzbare Schicht von 0,01 bis 0,25 mm Dicke, eine stoßfeste Schicht von 0,1 bis 0,75 mm Dicke und eine Klebeschicht von 0,05 bis 0,5 mm Dicke aufweist.

10. Bandumwicklungssystem nach einem der Ansprüche 1 bis 9, dadurch gekennzeichnet, daß die Außenumwicklung eine innere warm verschmelzbare Schicht von 0,01 bis 0,25 mm Dicke, eine stoßfeste Schicht von 0,1 bis 0,75 mm Dicke und eine äußere warm verschmelzbare Schicht von 0,01 bis 0,25 mm Dicke aufweist.

11. Verfahren zum Beschichten eines rohrförmigen Gegenstands mit einem Bandumwicklungssystem gemäß einem der Ansprüche 1 bis 10, bei dem um eine vorbereitete Oberfläche des Gegenstands die Innenumwicklung des Bandumwicklungssystems gewickelt wird, so daß seine Klebeschicht sich mit der Oberfläche des Gegenstands in Kontakt befindet, die Außenumwicklung des Bandumwicklungssystems gewickelt wird, wobei eine warm verschmelzbare Schicht sich direkt neben der warm verschmelzbaren äußeren Oberfläche der Innenumwicklung befindet, und diese Anordnung erhitzt wird, um die beiden nebeneinander liegenden, warm verschmelzbaren Schichten zusammenzuschmelzen.

12. Rohrleitung, die nach einem Verfahren gemäß Anspruch 11 beschichtet ist.

## Revendications

1. Système d'enveloppe en ruban pour protéger des articles tubulaires comprenant une enveloppe interne couvrant la surface de l'article à protéger et une enveloppe externe placée par dessus l'enveloppe interne, ladite enveloppe interne comprenant une couche de résistance au choc ou de résilience portant une couche adhésive ou d'adhésif à sa surface interne et une couche sur sa surface externe, ladite enveloppe externe comprenant une couche de support comportant une couche sur au moins l'une de ses surfaces, caractérisé en ce que l'enveloppe interne et l'enveloppe externe comportent, incorporée, une matière thermofusible et en ce que le système d'enveloppe en ruban précité est appliqué sur l'article tubulaire en sorte que par chauffage et refroidissement, l'enveloppe externe soit thermosoudée à l'enveloppe interne de manière à ainsi former un revêtement protecteur totalement fermé.

2. Système d'enveloppe en ruban pour protéger des articles tubulaires, comprenant une enveloppe interne couvrant la surface de l'article à protéger et une enveloppe externe placée par dessus ladite enveloppe interne, ladite enveloppe interne comprenant une couche de résistance au choc ou de résilience portant un revêtement adhésif ou d'un adhésif à sa surface interne et une couche sur sa surface externe, ladite enveloppe externe comprenant une couche de support possédant une couche sur au moins l'une de ses surfaces, caractérisé en ce que la couche sur la surface externe de l'enveloppe interne est thermofusible et en ce que la couche sur l'au moins une surface de l'enveloppe externe est thermofusible et en ce que ledit système d'enveloppe en ruban est appliqué sur l'article tubulaire avec la couche thermofusible de l'enveloppe interne disposée à l'extérieur et l'au moins une couche thermofusible de l'enveloppe externe étant juxtaposée à la couche thermofusible de l'enveloppe interne, si bien que lors du chauffage, les couches thermofusibles juxtaposées se soudent par fusion.

3. Système d'enveloppe en ruban suivant la revendication 2, caractérisé en ce que les deux surfaces de la couche support de l'enveloppe externe portent des couches thermofusibles qui peuvent être identiques ou différentes.

4. Système d'enveloppe en ruban suivant la revendication 2 ou la revendication 3, caractérisé en ce que la couche de support dans l'enveloppe externe est une couche de résistance au choc ou de résilience.

5. Système d'enveloppe en ruban suivant la revendication 4, caractérisé en ce que l'enveloppe interne comprend une couche de polyéthylène.

6. Système d'enveloppe en ruban suivant la revendication 4, caractérisé en ce que l'enveloppe externe comprend une couche de polyéthylène.

7. Système d'enveloppe en ruban suivant l'une quelconque des revendications 4, 5 et 6, caractérisé en ce que les couches de résistance au choc ou de résilience dans les enveloppes interne et externe sont en une polyoléfine qui peut être identique ou différente dans chaque couche.

8. Système d'enveloppe en ruban suivant l'une quelconque des revendications 1 à 7, caractérisé en ce que la matière thermofusible est constituée d'acétate d' éthyle et de vinyle, d'acrylate d'éthyle et de méthyle, ou d'un polyéthylène basse densité.

9. Système d'enveloppe en ruban suivant l'une quelconque des revendications 1 à 8, caractérisé en ce que l'enveloppe interne possède une couche thermofusible d'une épaisseur de 0,01 à 0,25 mm, une couche de résistance au choc ou de résilience d'une épaisseur de 0,1 à 0,75 mm et une couche adhésive ou d'adhésif de 0,05 à 0,5 mm d'épaisseur.

10. Système d'enveloppe en ruban suivant l'une quelconque des revendications 1 à 9, caractérisé en ce que l'enveloppe externe possède une couche thermofusible d'une épaisseur de 0,01 à 0,25 mm, une couche de résistance au choc ou de résilience d'une épaisseur de 0,1 à 0,75 mm et une couche thermofusible externe de 0,01 à 0,25 mm d'épaisseur.

11. Procédé de revêtement d'un article tubulaire par un système d'enveloppe en ruban suivant l'une quelconque des revendications 1 à 10, caractérisé en ce que l'on enroule autour d'une surface préparée de l'article, l'enveloppe interne du système d'enveloppe en ruban avec sa couche adhésive ou d'adhésif en contact avec la surface de l'article, on enveloppe l'enveloppe externe du système d'enveloppe en ruban avec une surface thermofusible juxtaposée à la surface externe thermofusible de l'enveloppe interne et on chauffe l'ensemble de manière à provoquer la soudure par fusion mutuelle des deux couches thermofusibles juxtaposées.

12. Canalisation tubulaire, revêtue par le procédé suivant la revendication 11.
